Europäisches Patentamt

European Patent Office

Office européen des brevets

(11) Publication number: **0 181 677**
**A2**

# (12) EUROPEAN PATENT APPLICATION

(21) Application number: **85201996.7**

(22) Date of filing: **10.01.83**

(51) Int. Cl.⁴: **G 01 S 7/52**
**G 01 S 7/62, G 06 F 15/74**

(30) Priority: **11.01.82 US 338731**
**11.01.82 US 338730**

(43) Date of publication of application:
**21.05.86 Bulletin 86/21**

(84) Designated Contracting States:
**DE FR GB**

(60) Publication number of the earlier application
in accordance with Art. 76 EPC: **0 083 985**

(71) Applicant: **TECHNICARE CORPORATION**
**90 Inverness Circle East**
**Englewood Colorado 80112(US)**

(72) Inventor: **Carmen, Ralph H.**
**RD3 Concord Road**
**Lebanon New Jersey 08833(US)**

(74) Representative: **Colgan, Stephen James et al,**
**CARPMAELS & RANSFORD 43 Bloomsbury Square**
**London WC1A 2RA.(GB)**

(54) Improved ultrasonic image storage device and method.

(57) An ultrasonic imaging system for medical diagnostic purposes is provided. A first digital signal representative of a video input signal is provided. The first digital signal comprises a series of digital amplitude samples of the transverse component of the input signal. A second series of samples is provided from the first series. Each element of the second series is the arithmetic average of a group of elements of the first series. The second digital signal series is compressed to form a third digital signal series, the third digital signal series being stored. The compressing provides a third digital signal which is a non-linear function of the second digital signal such that the granularity of the stored signal is increased in regions of high diagnostic interest at the expense of decreased resolution in areas of low diagnostic interest. When it is desired to display the stored digital image, the third digital signal is retrieved from the storage means (18) and expanded to provide the reconstituted second digital signal which is thereafter directed to a video display (120).

Fig.5.

0181677

## IMPROVED ULTRASONIC IMAGE STORAGE DEVICE AND METHOD

The present invention relates, in general, to ultrasonic imaging, and, in particular, relates to an improved technique and device for storing and retrieving ultrasonic images of the type used in medical diagnostics.

Ultrasonic imaging has found increased utility in the field of medical diagnosis. For example, ultrasonic imaging is utilized extensively for the detection and diagnosis of mammarian cancer. It is also utilized to ascertain various stages of fetal development. A major problem encountered with ultrasonic imaging has been the need to find a suitable technique for storing and retrieving the vast quantities of data generated when ultrasonic imaging techniques are employed. One technique employed for storing such data is to store information on photographic film. However, a typical mammarian scan for a single patient may comprise as many as sixty pages of photographs per patient with four photographs per page. Because of the unwieldy nature of such photographic records, less than a complete set of records may be collected and maintained for a given patient. Since record selection is generally done by a technician, the technician's judgment as to which data should be collected and which discarded may be substituted for that of the physician.

To alleviate the disadvantage of unwieldy photographic records of ultrasonic imaging, digital storage of such images has been proposed. However, ultrasonic imaging generates large quantities of digital data. While digital data storage techniques are available to store large quantities of digital data, retrieving such information may be sufficiently time consuming so as to be undesirable for a busy physician. One alternative is to provide a minimum digital storage capacity and to simply collect less data. In this manner, information retrieval time may be minimized but fewer than the optimum number of records per patient may be stored. Alternatively, if many records per patient are stored, but with data density for each record reduced, the image resolution for each record may be less than optimum.

US-A-4 234 937 (Eggleton et al.) discloses a digital electronic system for improving the resolution of dynamic range-handling capacity for received ultrasound in reflection or transmission imaging systems. The disclosed ultrasonic tissue imaging system comprises: an ultrasonic transducer; input imaging means for converting signals received by said transducer to an analog video input signal; means for producing a first series of digital amplitude samples representative of said video input signal; means for forming a second series of digital amplitude samples from said first series; means for converting said second series of samples to a video output signal; and display means responsive to said video output signal for producing an image of said tissue.

It would be desirable to provide a system in which the image has increased granularity in regions of greater interest from a diagnostic standpoint and decreased granularity in regions of lesser interest.

The foregoing need is met by the provision of the new ultrasonic image storage system and method of the present invention which employs the technique of data compressing and expanding.

The system of the present invention is
characterised in that:  the means for forming a
second series of samples includes means for
compressing said first series of samples to produce a
compressed series of samples which is a first
non-linear function of said first series of samples;
the system includes means for storing and retrieving
said compressed series of samples;  and the
converting means includes means for expanding said
retrieved compressed series of samples to produce a
video output signal which is substantially similar to
said video input signal.

The system may also take advantage of the
technique disclosed in copending European patent
application No.83300111.8 (publication No.0 083 985)
for reduction of storage capacity, which takes
advantage of the fact that an ultrasonic image is
more highly variable in a direction along the axis of
the ultrasonic transducer than in a direction
transverse to that axis.  Thus, the frequency of the
axial component of a video signal representing an
ultrasonic image is higher than the frequency of the
transverse component.  Because the frequency of the
transverse component of the video signal is
relatively low, a storage and retrieval technique may
be employed wherein the memory density allocated for
storage of the transverse component is decreased
without loss of axial resolution and without
noticeable loss of transverse resolution.

In accordance with the invention described in
the copending application, the analog video input
signal is converted to a first series of digital
amplitude samples.  A second series of digital
amplitude samples is formed from the first series,
with each element of the second series being the average of a different group of elements in the first
series. Since the second series of samples comprises
fewer elements than the first series of samples,
memory density may be decreased. However, since the
second series of samples is the average of elements
from the first series of samples, the second series
of samples provides a reasonable approximation of the
original video input signal. Since the frequency of
the transverse component of the ultrasonic image is
relatively low, such an approximation is sufficiently
accurate to faithfully reproduce an ultrasonic image.

Preferably, the method of the present invention
is applied following production of the second series
of samples, and compressing means is provided for
producing a third series of digital signals from the
second digital signal series. In accordance with the
present invention, the third signal series is a
non-linear function of the second digital signal
series, the non-linear function being such as to
provide increased granularity in regions of greater
interest from a diagnostic standpoint and decreased
granularity in regions of lesser interest. A means
for storing and retrieving the third digital signal
series is provided and an expanding means is provided
to reconstitute the second digital signal series from
the retrieved third digital signal series. The
reconstituted second digital signal series is
thereafter smoothed and converted to analog form for
video display. Since the stored digital signal
employs increased granularity in regions of high
interest, resolution in regions of interest is
improved at the expense of slightly increased
distortion in regions of low diagnostic interest.

When ultrasonic imaging is utilized for the
detection and diagnosis of, for example, mammarian cancer, low amplitude video input signals correspond to areas of possible malignancy. By use of the present invention, granularity of the stored digital signal is increased by the compressing and expanding means for low level signals and decreased for high level signals. This is accomplished by insuring that the compressing means produces a third digital signal series which is a monotonically increasing function of the second digital signaT series, the function having a monotonically decreasing slope. Further, the expanding means provides that the reconstituted digital signal produced thereby is a monotonically increasing function of the third digital signal series input thereto with a monotonically increasing slope.

The present invention will be more fully understood by reference to the accompanying drawings, in which:

Fig. 1 is a general block diagram of an ultrasonic imaging system according to the present invention;

Fig. 2 is a schematic diagram of the image storage and retrieval means of Fig. 1;

Fig. 3 is a schematic circuit diagram of the video input processing circuit of Fig. 2;

Fig. 3A is a plot of the amplitude of a video input signal versus time at the input of the video input processing circuit of Fig. 2;

Fig. 3B is a plot of amplitude versus time of the signal at the input to the compressing means of Fig. 3;

Fig. 4 is a plot of the transfer function of the compressing means of the video input processing circuit of Fig. 3;

Fig. 5 is a schematic circuit diagram of the video output processing circuit shown in Fig. 2; and

Fig. 6 is a plot of the transfer function of the expanding means of the video output processing circuit of Fig. 5.

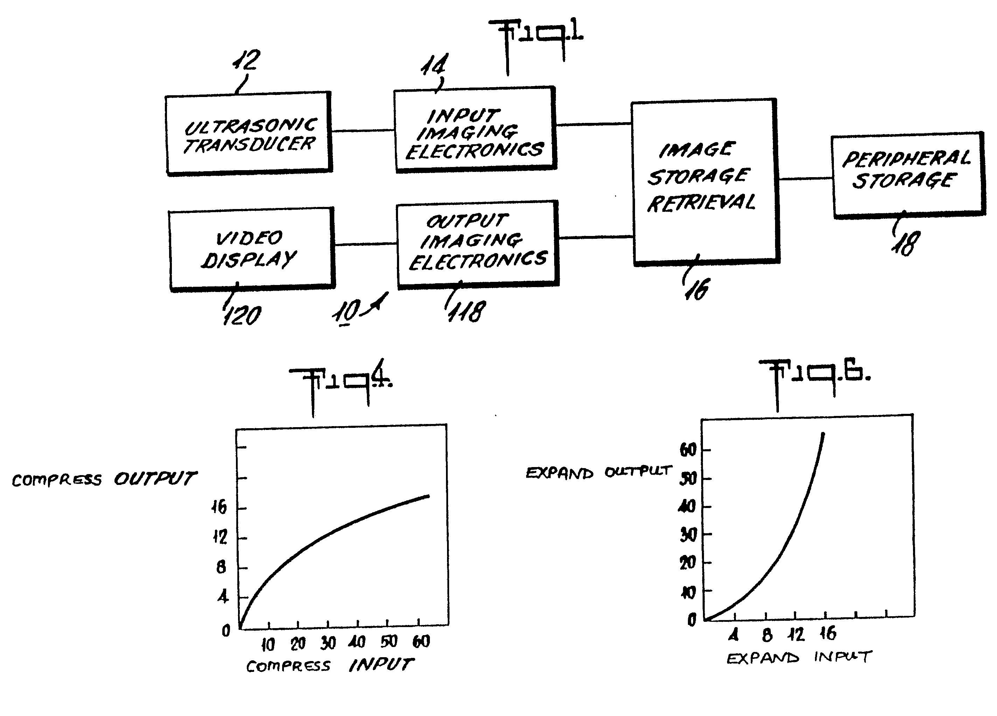

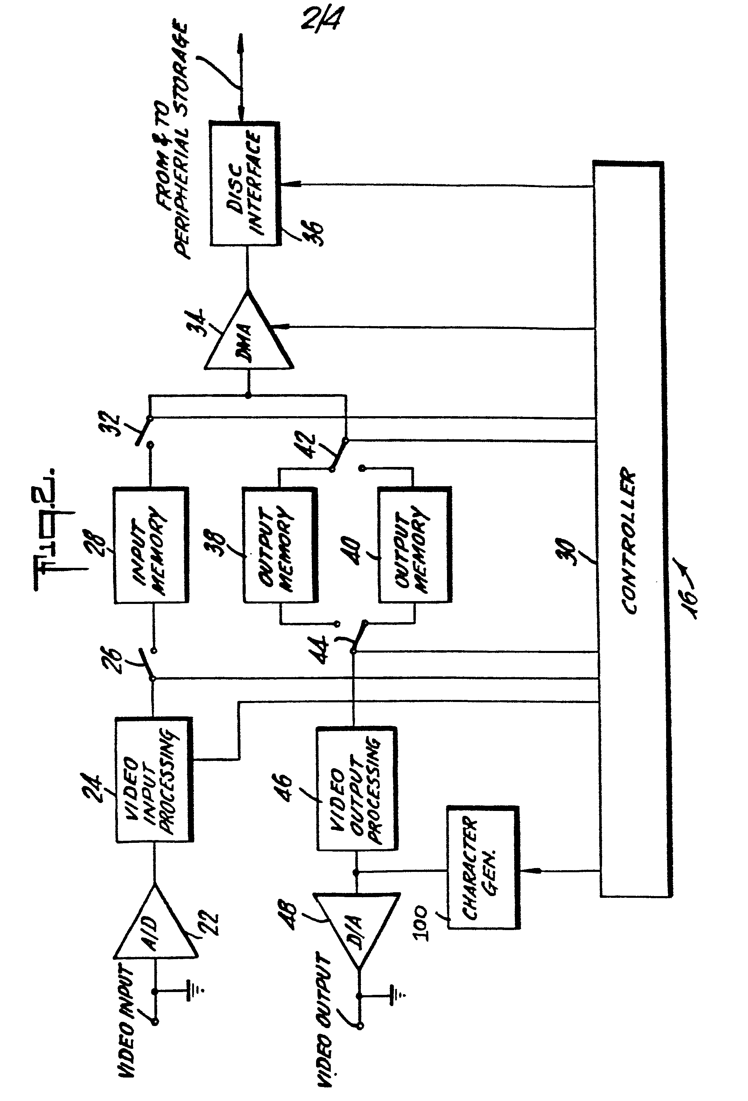

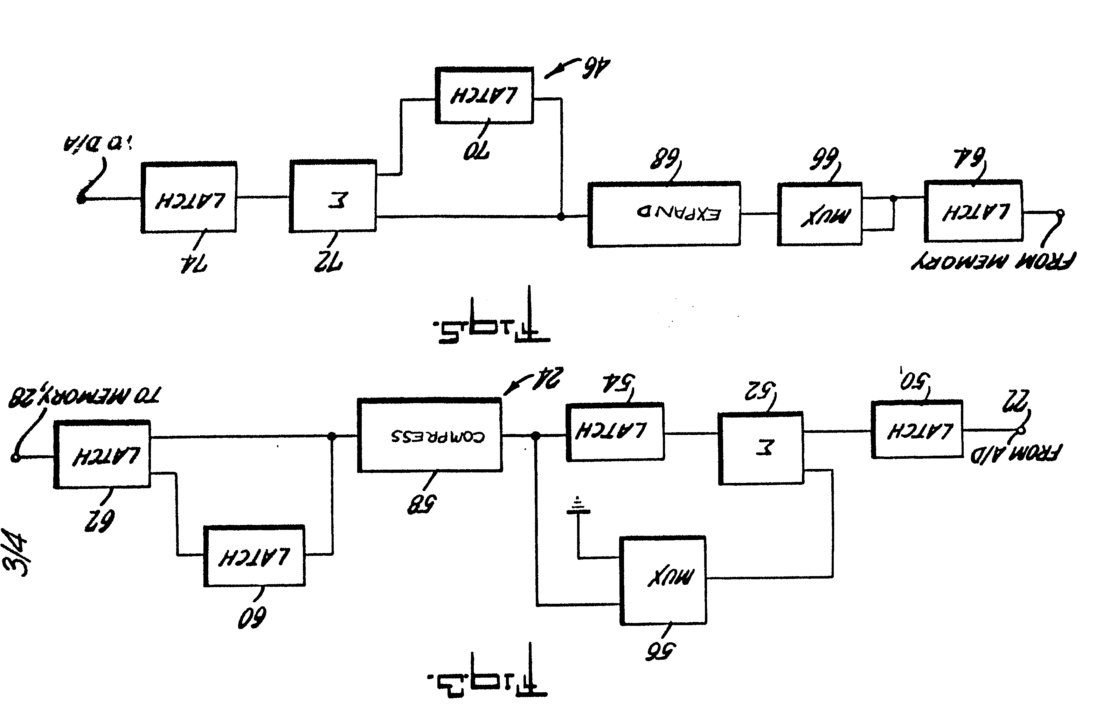

Referring now to Fig. 1, the ultrasonic imaging system of the present invention is shown generally at 10. The imaging system 10 of the present invention has the capability of storing 240 records or frames of information per patient. The ultrasonic imaging system 10 of the present invention employs an ultrasonic transducer 12 of conventional type. Signals received by the ultrasonic transducer 12 are directed to input imaging electronics 14. The input imaging electronics 14 are also of conventional design. The input imaging electronics 14 provides an analog video input signal which is representative of the ultrasonic image detected by the transducer 12. 176 lines of the analog video input signal constitute one frame or record of information from a given patient. The analog video input signal emanating from the input imaging electronics 14 is directed to an image storage and retrieval circuit 16 which will be described in detail in connection with Fig. 2 below. The image storage and retrieval circuit 16 is effective to convert the analog video signal to digital form and for directing the digital signal to a peripheral storage means 18. The peripheral storage means 18 preferably comprises a three megabyte floppy disk. As mentioned above, when the ultrasonic transducer 12 is utilized for diagnostic purposes, 240 records or frames are digitized and stored in the peripheral storage means 18, per patient. Upon command from a control means described more completely in connection with Fig. 2 below, image storage and retrieval means 16 retrieves patient records from the peripheral storage means 18 and converts such records to analog form. The converted analog signals are then directed to output imaging electronics 118, also of conventional design, which converts the signals to a form suitable for display on a cathode ray tube such as shown at 120.

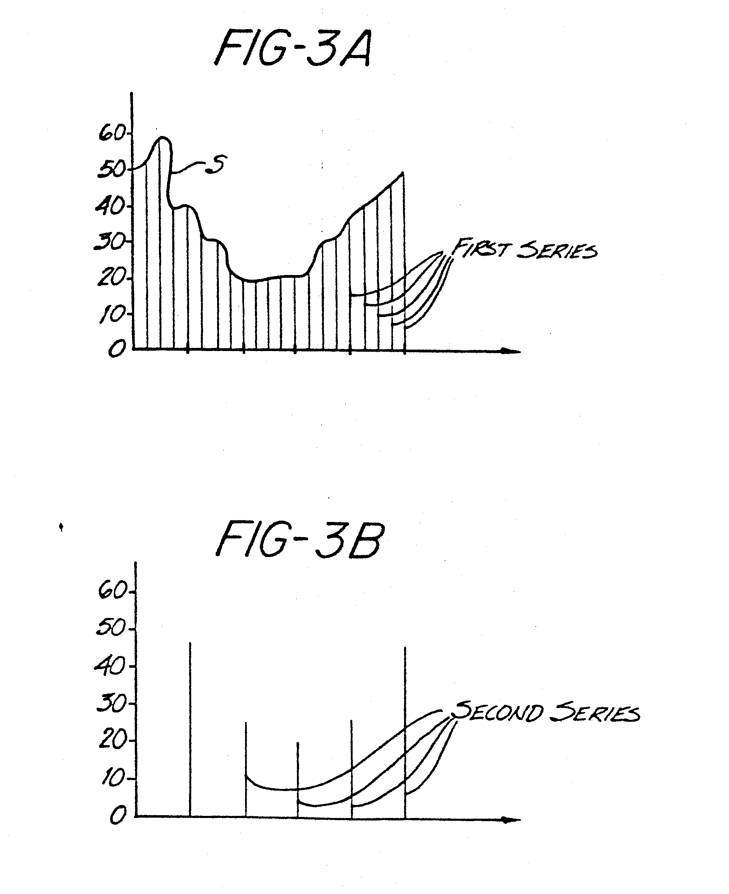

Referring now to Fig. 2, the image storage and retrieval means 16 will be described in detail. The image storage and retrieval means 16 includes an analog-to-digital converter 22 which is responsive to the analog video input signal from the input imaging electronics 14. The analog to digital converter 22 samples the analog video input signal at a rate of, for example, 10 MHz to produce a first digital input signal comprising a first series of amplitude samples representative of the analog input signal. The first series of samples preferably comprises 512 samples of information per line. Each sample comprises a 6-bit value corresponding to an instantaneous amplitude of the analog input signal. The first series of amplitude samples is directed to a video input processing circuit 24 which will be described in detail in connection with Fig. 3 below.

The output of the video input processing circuit 24 is a second digital signal which is directed through a switch 26 to an input memory 28. The switch 26 operates under the control of a microprocessor control means 30. The output of memory 28 is connected by means of a switch 32, also under the control of the control means 30, to a direct memory access means 34. When the imaging system of the present invention is in an input mode, the microprocessor controller 30 controls switches 26 and 32 so as to store the second digital signal emanating from the video input processing circuit 24 in the input memory 28. After the input memory 28 is filled with one frame of input informtion, a direct memory access means 34 is activated by the microprocessor controller 30 so as to transfer the stored information from input memory 28 through the disk interface 36 to the peripheral storage means 18. Images are directed to the peripheral storage means 18 at a rate of, for example, four frames per second.

When it is desired to retrieve a patient record from the peripheral storage means 18, the switches 26 and 32 are opened at the command of the microprocessor controller 30. Retrieved information from the peripheral storage means 18 is thereafter directed through the disk interface 36 and the direct memory access means 34 to either one or the other of output memories 38 and 40, the particular one being determined by the position of the switching means 42. The switching means 42 also operates under the control of the microprocessor controller 30. Two memory means 38 and 40 are provided so that retrieval from the storage means 18 to either output memory 38 or 40 can be overlapped in time with the viewing of a previously retrieved image in the alternate output memory 40 or 38. In this way, a continuous visual image is achieved.

When the imaging system is operating in an output mode, each of the output memories 38 and 40 contain a second digital signal retrieved from peripheral storage means 18. This retrieved, second digital signal is directed through a switching means 44, also under the control of microprocessor controller 30, to a video output processing circuit 46, which will be described in more detail in connection with Fig. 5 below. The video output
processing circuit 46 reconstitutes the first digital
signal from the second digital signal input thereto
by performing an inverse transform of the type
performed in the video input processing circuit 24.
The first digital signal output from the video output
processing circuit 46 is directed to analog-to-
digital converter 48 which produces a video output
signal substantially similar to the analog video
input signal which was originally received from input
imaging electronics 14. The video output signal is
an analog signal which is directed to the video
display 20 referred to in connection with Fig. 1
above.

In a preferred embodiment of the present
invention, the image storage and retrieval means 16
of the present invention further includes a character
generating means 100 which is under the control of
the microprocessor controller 30. The
analog-to-digital converter 48 is responsive to the
character generating means 100 so that upon command
of the microprocessor controller 30, the alphanumeric
information may be simultaneously or sequentially
displayed along with patient records.

Referring now to Fig. 3, the video input
processing circuit 24 shown in Fig. 2 will be
described in detail. In accordance with the
invention disclosed and claimed in the
above-referenced copending application, the video
input processing circuit 24 includes a means for
reducing the data density of ultrasonic images in a
direction lateral to the axis of the transducer 12.
This means includes a first latch 50, a summing means
52, a second latch 54, and a first digital
multiplexer 56. The video input processing circuit 24 also includes in accordance with the present invention, a compressing means 58, a third latch 60 and a fourth latch 62.

The first six-bit sample of the first digital input signal from the analog-to-digital converter 22 is directed to the first latch 50 and from there to the summing means 52, as shown. At the summing means 52, the first six-bit sample of the first digital signal is added to the eight-bit output of the first digital multiplexer 56, which output is initially zero. The eight-bit output of the summing means 52 is directed to a second latch 54, the output of which is directed to an input of the first digital multiplexer 56. The second six-bit sample of the first digital input signal from the analog-to-digital converter 22 is then directed to the latch 50 and from there to the summing means 52, where it is added to the last preceding eight-bit sample of that digital signal from the digital multiplexer 56. After preferably four successive iterations, the most significant six bits of the eight bits stored in latch 54 are directed to the compressing means 58. These six bits comprise the average of four successive samples of the first digital signal.

Thus the analog-to-digital converter 22 provides a first series of amplitude samples. At the output of the latch 54, a second series of digital amplitude samples is provided which is related to the first series. The second series of amplitude samples has fewer elements than the first series since each element $b_n$, of the second series of amplitude samples is an average of a group of four elements, $a_m$, $a_m + 1$, $a_m + 2$, and $a_m + 3$ of the first series of samples. Since the second series of samples has but one fourth the number of samples than the first series, and since the second series of samples (after compressing as explained below) is ultimately stored in storage means 18, memory density is appreciably reduced.

While in the embodiment shown in Fig. 3, each element, $b_n$, of the second series of samples is comprised of the average of four elements $a_m$ through $a_m + 3$ of the first series of samples, other arrangements are within the scope of the present invention. For example, the output of latch 54 could also comprise the average of some different number of samples from analog-to-digital converter 22 as opposed to the four samples referred to above. Thus, each element of the second series of samples is related to the elements of the first series of samples by the relationship

$$b_n = \frac{\sum_{i=0}^{i=k-1} a_{nk-i}}{k}$$

where n is a positive integer identifying each element of the second series of samples and k is the number of elements in each group of elements being summed.

The operation of the means for reducing data density of ultrasonic images in a direction lateral to the axis of the transducer 12 will be more fully appreciated by referrence to Figs. 3A and 3B. Fig. 3A is a plot of the amplitude versus time of the output of the analog-to-digital converter 22. An analog video input signal S is sampled by the .analog-to-digital converter 22 to form the first series of amplitude samples shown in Fig. 3A. However, as may be seen from Fig. 3B, at the output of the latch 54, a second series of amplitude samples is produced, each element of which is an average of a group of samples shown in Fig. 3A. Since the frequency of the analog video input signal S in a direction transverse to the axis of the ultrasonic transducer 12 is relatively low, the second series of amplitude samples shown in Fig. 3B is a reasonably accurate approximation of that video input signal. Since the number of elements in the second series (Fig. 3B) is less than the number of elements in the first series (Fig. 3A) the memory capacity requirements of the peripheral means 18 are substantially reduced.

In accordance with the present invention, the compressing means 58 is a random access memory, the output of which is a third digital signal (four bit), the third digital signal being a non-linear function of the samples of the second digital signal input thereto. In this manner, the granularity of the second digital signal is increased in regions of greater diagnostic interest and decreased in regions of lesser interest. The transfer function of the compressing means 58 will be described in detail in connection with Fig. 4 below. Since the output of the compressing means 58 is a four-bit binary number and since the data format employed by most commonly utilized peripheral storage means is an eight-bit format, the output of the compressing means 58 may be converted to an eight-bit format by taking the first four-bit byte from the compressing means 58 and storing it in a latch 60. The next four-bit byte from the compressing means 58 is immediately directed to the fourth latch (eight bits) 62, wherein the four-bit byte stored in latch 60 is combined to form an eight-bit byte directed to the input memory 28.

Referring now to Fig. 4, the transfer function of the compressing means 58 will be described in detail. As may be seen in Fig. 4, when the transfer function (compress output versus compress input) is plotted, the plot is a monotonically increasing curve with a monotonically decreasing slope. Utilizing this transfer function, the granularity of low level input signals is increased at the expense of high amplitude level input signals. In this manner, resolution is enhanced for low level signals at the expense of high level signals, low level signals corresponding to areas of possible malignancy. Thus, from Fig. 4 it may be seen that a change in the value of the input to the compressing means 58 produces a greater change in the value of the output of the compressing means at lower values of the compressing means input than at higher values of that input.

Referring now to Fig. 5, the video output circuit 46 will be described in detail. The video output processing circuit includes a latch 64 to which retrieved eight-bit digital information from the peripheral storage means 18 is directed. The digital signal from the latch 64 is directed to a multiplexer 66 in which it is converted to two four-bit bytes. The digital signal from the multiplexer 66 is then directed to the expanding means 68 in accordance with the present invention. The expanding means is operative to convert the retrieved third digital signal from the storage means 18 to a reconstituted second digital signal. The reconstituted digital signal output from the expanding means 68 is a non-linear function of the digital signal input thereto. The non-linear transfer function of the expanding means 68 will be described in detail in connection with Fig. 6 below.

Referring now to Fig. 6, the transfer function of the expanding means 68 will be seen. As will be seen in Fig. 6, the transfer function of the expanding means 58 (expand input versus expand output) is a monotonically increasing function with a monotonically increasing slope. Thus, the transfer function of the expanding means 68 is the inverse of the transfer function of the compressing means 58. The compressing means 58 preferably comprises a random access memory, each value of the second digital signal stored therein being located at an address determined by a value of the third digital signal input thereto. The expanding means 68 also comprises a random access memory storing the various values of the second digital signal at addresses determined by values of the retrieved third digital signal.

The output of the expanding means 68 is directed to a smoothing circuit comprised of a latch 70 and a summing means 72, the output of the summing means then being directed to another latch 74. Each of the latches 70 and 74 are strobed by clock pulses (from a clock means not shown). The latch 74 is strobed at a rate twice that of the rate utilized to strobe latch 70. In this manner, the output of latch 74 is a digital signal comprising a fourth series of digital samples, each element, $c_n$, of which is related to the elements, $b_m$ of the second series of digital samples by the relationships:

$$c_n = \frac{b\left(\frac{n}{2}\right)}{2}$$

where n is a positive even integer;    and

$$c_n = \frac{\left[ b\left(\frac{n-1}{2}\right) + b\frac{n+1}{2} \right]}{2}$$

where n is a positive odd integer.

Thus, the digital signal emanating from the latch 74, comprises a series of amplitude samples $c_n$, $c_n + 1$...., etc., the third series being directed to the digital-to-analog converter 48 where an analog signal suitable for video display is produced.

CLAIMS

1. An ultrasonic imaging system (10), for collecting and displaying body tissue images, comprising;

an ultrasonic transducer (12);

input imaging means (14) for converting signals received by said transducer (12) to an analog video input signal;

means (22) for producing a first series of digital amplitude samples representative of said video input signal;

means (24, 30) for forming a second series of digital amplitude samples from said first series;

means (46, 48, 118) for converting said second series of samples to a video output signal; and

display means (120) responsive to said video output signal for producing an image of said tissue, characterised in that:

said means (24, 30) for forming a second series of samples includes means (58) for compressing said first series of samples to produce a compressed series of samples which is a first non-linear function of said first series of samples (Fig. 4);

the system (10) includes means (18, 26, 28, 30, 32, 34, 36, 38, 40, 42, 44) for storing and retrieving said compressed series of samples; and

the converting means includes means (68) for expanding said retrieved compressed series of samples to produce a video output signal which is substantially similar to said video input signal.

2. The system of claim 1, wherein said expanding means (68) exhibits a second non-linear function (Fig. 6) whereby certain regions of said image have enhanced resolution compared to certain other regions.

3. The system of claim 2, wherein said second non-linear function is a monotonically increasing function with a monotonically increasing slope.

4. The system of claim 2 or claim 3, wherein said second non-linear function is the inverse of said first non-linear function.

5. The system of any one of claims 1 to 4, wherein said first non-linear function is a monotonically increasing function with a monotonically decreasing slope.

6. The system of any one of claims 1 to 5, wherein said compressing means (58) comprises a random access memory, each value of said compressed series of samples being stored at an address therein determined by a value of said first series of samples.

7. The system of any one of claims 1 to 6, wherein said expanding means (68) comprises a second random access memory, each value of said expanded series of samples being stored at an address therein determined by a value of said compressed series of samples.

8. A method of storing and retrieving an ultrasonic image comprising:

providing an analog video input signal representative of said image;

converting said analog video input signal to a first series of digital amplitude samples;

forming a second series of digital amplitude samples from said first series; and

converting said second series of samples to a video output signal for video display of an image,

characterised in that

said first series of samples is compressed to produce a compressed series of samples which is a non-linear function of said first series of samples;

said compressed series of samples is stored in and retrieved from a memory;

said retrieved compressed series of samples is expanded to produce said second series of samples which is converted to a video output signal which is substantially similar to said video input signal.

**Fig.1**

12 — ULTRASONIC TRANSDUCER

14 — INPUT IMAGING ELECTRONICS

IMAGE STORAGE RETRIEVAL — 16

PERIPHERAL STORAGE — 18

120 — VIDEO DISPLAY

118 — OUTPUT IMAGING ELECTRONICS

10

**Fig.4.**

COMPRESS OUTPUT

16
12
8
4
0

10 20 30 40 50 60

COMPRESS INPUT

**Fig.6.**

EXPAND OUTPUT

60
50
40
30
20
10
0

4 8 12 16

EXPAND INPUT

1/4

0181677

**Fig.2.**

VIDEO INPUT → 22 A/D → 24 VIDEO INPUT PROCESSING → 26 → 28 INPUT MEMORY → 32 → 34 DMA → 36 DISC INTERFACE → FROM & TO PERIPHERIAL STORAGE

38 OUTPUT MEMORY

40 OUTPUT MEMORY

42

44

VIDEO OUTPUT → 48 D/A → 46 VIDEO OUTPUT PROCESSING

100 CHARACTER GEN.

30 CONTROLLER

16

24

# Fig.3.

**FROM A/D** — LATCH _50_ — Σ _52_ — LATCH _54_ — _24_ — COMPRESS _58_ — LATCH _60_ — LATCH _62_ — **TO MEMORY, 28**

MUX _56_

_22_

# Fig.5.

**FROM MEMORY** — LATCH _64_ — MUX _66_ — EXPAND _68_ — LATCH _70_ — _46_ — Σ _72_ — LATCH _74_ — **TO D/A**

FIG-3A

FIRST SERIES

FIG-3B

SECOND SERIES